# EUROPÄISCHE PATENTSCHRIFT

(11) **EP 3 494 153 B1**
(45) Veröffentlichungstag und Bekanntmachung des Hinweises auf die Patenterteilung: **09.09.2020**
(21) Anmeldenummer: 17736681.2
(22) Anmeldetag: 11.07.2017
(51) Int. Cl.: C08G 18/48, C08G 18/76, C08G 18/32, C08L 75/08

(54) **TRANSPARENTE TPU BLENDS MIT PYRROLIDON ENTHALTENDEN POLYAMIDEN**
TRANSPARENT TPU BLENDS WITH PYRROLIDONE CONTAINING POLYAMIDES
MÉLANGES TPU TRANSPARENTS COMPRENANT DES POLYAMIDES CONTENANT DU PYRROLIDONE

(30) Priorität: 02.08.2016 EP 16182363
(43) Veröffentlichungstag der Anmeldung: 12.06.2019
(73) Patentinhaber: BASF SE, 67056 Ludwigshafen am Rhein (DE)
(72) Erfinder: YAMAMOTO, Motonori, 67056 Ludwigshafen (DE); KRAEMER, Roland Helmut, Shanghai 200137 (CN)
(74) Vertreter: BASF IP Association
(86) Internationale Anmeldenummer: PCT/EP2017/067451
(87) Internationale Veröffentlichungsnummer: WO 2018/024450

(56) Entgegenhaltungen:
- WO-A1-2009/103765
- WO-A1-2010/076225
- DE-A1- 4 333 238
- DE-A1-102006 036 539

## Beschreibung

Die Erfindung betrifft thermoplastische Formmassen, enthaltend
A) 10 bis 98 Gew.-% eines thermoplastischen Polyurethans,
B) 1 bis 50 Gew.-% eines thermoplastischen pyrrolidonhaltigen Polyamides, enthaltend Einheiten, welche sich von 2-Pyrrolidon ableiten,
C) 0 bis 40 Gew.-% eines halogenfreien Flammschutzmittels,
D) 0 bis 60 Gew.-% eines faser- oder teilchenförmigen Füllstoffes oder deren Mischungen,
E) 0 bis 30 Gew.-% weiterer Zusatzstoffe,
wobei die Summe der Gewichtsprozente A) bis E) 100 % ergibt.

Außerdem betrifft die vorliegende Erfindung flammgeschützte Formmassen aus diesen Polymerkomponenten und die Verwendung derartiger Formmassen zur Herstellung von Fasern, Folien und Formkörpern und die hierbei erhältlichen Formkörper, Fasern und Folien jeglicher Art.

Pyrrolidonhaltige Polymere werden in den Lehren der US 3678015, WO2009/103765 A1 und DE- A 4333238A1 beschrieben.

In akademischen Studien (Ali et. al., Macromolecules 2013, 46, 3719-3725) werden solche Polyamide als bioabbaubare Polymere beschrieben.

Thermoplastische Polyurethane (TPU) finden Einsatz als Werkstoffe in zahlreichen Anwendungen, etwa als Kabelmäntel, Bodenbeläge, rutschfeste Griffe, auf Grund ihrer hohen mechanischen Widerstandsfähigkeit, und der sehr guten Oberflächenqualität. Aufgrund der sehr feinen Mikrostruktur der teilkristallinen Domänen können transparente Materialien hergestellt werden.

Ein wesentlicher Nachteil von TPU ist die verhältnismäßig hohe Wärmefreisetzungsrate und die nahezu rückstandslose Verbrennung, wie anhand von thermogravimetrischen Messungen und Messungen mit dem Cone Calorimeter gezeigt werden kann. In vielen Anwendungen, die eine Flammwidrigkeit erfordern, können unbehandelte TPU s daher nicht eingesetzt werden. Zur Verzögerung einer möglichen Brandausbreitung werden daher Flammschutzmittel eingesetzt. Es ist erwünscht, dass durch den Einsatz der Flammschutzmittel die Wärmefreisetzungsrate erniedrigt und die Rückstandsmenge in der Verbrennung erhöht werden. Die Flammschutzmittel führen in der Regel allerdings dazu, dass die TPU Formmassen nicht mehr transparent sind und die mechanichen Eigenschaften deutlich beeinträchtigt werden.

Der Vorteil von TPU als Werkstoff liegt in der ausgesprochen hohen Schlagzähigkeit und Dehnbarkeit des Materials. Allerdings lässt sich die Härte des Materials nur über einen begrenzten Bereich einstellen und insbesondere die erzielbare maximale Streckspannung ist begrenzt. Wünschenswert wäre, daß den Anwendungsbereich von TPU auszuweiten, insbesondere durch höhere Härten und Streckspannungen bei verbleibend hoher Transparenz und Schlagzähigkeit.

Blends aus thermoplastischen Polyether-Polyurethan mit PA12 sind kommerziell erhältlich. Diese Materialien verfügen über eine ausgezeichnete Hydrolysebeständigkeit, Kälteflexibilität und Resistenz gegen Mikroorganismen. Allerdings zeichnet sich PA12 ebenfalls durch eine hohe Wärmefreisetzungsrate und eine nahezu rückstandslose Verbrennung aus (Z. Wan, X. Du, R. Song, X. Meng, Z. Jiang and T. Tang, Polymer, 2007, 48, 7301). Zudem sind Mischungen von TPU mit PA12 opak und es können nur in eingeschränkten Mischungsverhältnissen und für spezielle Typen gut mischbare Formmassen erzielt werden (S.S. Pesetskii, V. Fedorov, B. Jurkowski and N.D. Polosmak, Journal of Applied Polymer Science, 1999, 74, 1054).

Der vorliegenden Erfindung lag daher die Aufgabe zugrunde, thermoplastische TPU Formmassen zur Verfügung zu stellen, welche durch Mischen von Polyamiden mit pyrrolidonhaltigen Polyamiden eine niedrigere Wärmefreisetzungskapazität (heat release capacity) und niedrigere spezifische Verbrennungswärme aufweisen, was zu einer intrinsisch besseren Flammwidrigkeit der Materialen führen sollte.

Demgemäß wurden die eingangs definierten Formmassen gefunden. Bevorzugte Ausführungsformen können den Unteransprüchen entnommen werden.

Überraschenderweise wurde gefunden, dass sich in Blends aus TPU mit pyyrrolidonhaltigen Polyamiden sowohl die thermische Stabilität erhöhen lässt, als auch die Wärmefreisetzungsrate reduzieren lässt, zusätzlich auch die maximale Streckspannung des Materials deutlich verbessert werden kann. Überraschend ist zudem, dass in solchen Blends eine sehr hohe Reißdehnung und sogar die Transparenz des Materials erhalten werden können. Im Vergleich zu PA12 können Mischungen der pyyrrolidonhaltigen Polyamide mit TPU in gewöhnlichen Extrusionsprozessen deutlich einfacher hergestellt werden.

Als Komponente A) enthalten die erfindungsgemäßen Formmassen 10 bis 98, vorzugsweise 20 bis 90 und insbesondere 30 bis 80 Gew.-% mindestens eines thermoplastischen Polyurethans.

Thermoplastische Polyurethane sind hinlänglich bekannt. Die Herstellung erfolgt durch Umsetzung von (a) organischen und/oder modifizierten Isocyanaten mit (b) gegenüber Isocyanaten reaktiven Verbindungen, insbesondere difunktionelle Polyole mit einem zahlenmittleren Molekulargewicht von 0,5 x 10³g /mol bis 10 x 10³g /mol und gegebenenfalls (c) Kettenverlängerungsmitteln mit einem Molekulargewicht von 0,05 x 10³ g /mol bis 0,499 x 10³g /mol gegebenenfalls in Gegenwart von (d) Katalysatoren und/oder (e) üblichen Hilfsstoffen und/oder Zusatzstoffen und/oder Flammschutzmitteln (f).
Die Komponenten (a) Isocyanat, (b) gegenüber Isocyanaten reaktive Verbindungen / Polyol (c) Kettenverlängerungsmittel werden einzeln oder zusammen auch als Aufbaukomponenten angesprochen. Die Aufbaukomponenten einschließlich des Katalysators und/oder der üblichen Hilfsstoffe und/oder Zusatzsstoffe werden auch Einsatzstoffe genannt.

Zur Einstellung von Härte und Schmelzindex der TPU können die eingesetzten Mengen der Aufbaukomponenten (b) und (c) in ihren molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung von weicheren thermoplastischen Polyurethanen, z.B. solchen mit einer Shore A Härte von kleiner als 95, vorzugsweise von 95 bis 75 , insbesondere 90 bis 80 Shore A (gemessen gemäß DIN 53505), können bevorzugt die im wesentlichen difunktionellen Polyole (b) auch als Polyhydroxylverbindungen (b) bezeichnet und die Kettenverlängerungsmittel (c) vorteilhafterweise in Molverhältnissen von 1:1 bis 1:5, vorzugsweise 1:1,5 bis 1:4,5 verwendet werden, so daß die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen TPU werden die Aufbaukomponenten (a), (b), das Kettenverlängerungsmittel (c), in Gegenwart von Katalysator (d) und gegebenenfalls Hilfsmitteln und/ oder Zusatzstoffen (e) in solchen Mengen zur Reaktion gebracht, daß das Äquivalenzverhältnis von NCO-Gruppen der Isocyanate (a) zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Vorzugsweise werden erfindungsgemäß TPU hergestellt, bei denen das TPU ein gewichtsmittleres Molekulargewicht von mindestens 0,1x10⁶ g/mol, bevorzugt von mindestens 0,4 x10⁶ g/mol und insbesondere größer als 0,6 x10⁶ g/mol aufweist. Die Obergrenze für das gewichtsmittlere Molekulargewicht der TPU wird in aller Regel durch die Verarbeitbarkeit wie auch das gewünschte Eigenschaftsspektrum bestimmt. Bevorzugt liegt das zahlenmittlere Molekulargewicht der TPU nicht über 0,8x10⁶ g/mol. Bei den vorstehend für das TPU wie auch für die Aufbaukomponenten (a) und (b) angegebenen mittleren Molekulargewichten handelt es sich um die mittels Gelpermeationschromatographie bestimmten Gewichtsmittel.

Als organische und/oder modifizierte organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- Bis(isocyanatomethyl)cyclohexan und/oder 1,3-Bis(isocyanatomethyl)cyclohexan (HXDI), 2,4-Paraphenylendiisocynat (PPDI), 2,4-Tetramethylenxylendiisocyant (TMXDI), 4,4'-, 2,4'- und 2,2'-Dicyclohexylmethan-diisocyanat (H12 MDI) 1,6-Hexamethylen-diisocyanat (HDI)1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Besonders bevorzugt werden Diphenylmethan-diisocyanat-Isomerengemische mit einem 4,4'MDI Anteil von größer als 96 Gew-% und insbesondere im Wesentlichen reines 4,4'MDI eingesetzt.

Als gegenüber Isocyanaten reaktive Verbindungen (b) sind bevorzugt solche mit einem Molekulargewicht zwischen 500 g/mol und 8 x 10³ g/mol, bevorzugt 0,7 x 10³ g/Mol bis 6,0 x 10³ g/Mol, insbesondere 0,8 x 10³ g/Mol bis 4,0 x 10³ g/Mol.

Die gegenüber Isocyanat reaktive Verbindung (b) hat im statistischen Mittel mindestens 1,8 und höchstens 3,0 zerewitinoffaktiven Wasserstoffatomen, diese Anzahl wird auch als Funktionalität der gegenüber isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Die gegenüber Isocyanat reaktive Verbindung ist im Wesentlichen linear und ist eine gegenüber Isocyanat reaktive Substanz oder eine Mischung verschiedener Substanzen, wobei dann die Mischung die genannte Anforderung erfüllt. Tri- oder höherfunktionelle Polyisocyanat werden in der Menge jedoch so begrenzt, dass noch thermoplastisch verarbeitbare Polyurethane erhalten werden.
Diese langkettigen Verbindungen werden mit einem Stoffmengenanteil von 1 Äquivalent-Mol% bis 80 Äquivalent-Mol%, bezogen auf den Isocyanatgruppengehalt des Polyisocyanats eingesetzt.

Bevorzugte besitzen die gegenüber Isocyanat reaktive Verbindung (b) eine reaktive Gruppe ausgewählt aus der Hydroxylgruppe, der Aminogruppe, der Mercaptogruppe oder der Carbonsäuregruppe. Bevorzugt handelt es sich um die Hydroxylgruppe. Besonders bevorzugt ist die gegenüber Isocyanat reaktive Verbindung (b) ausgewählt aus der Gruppe der Polyesterole, der Polyetherole oder der Polycarbonatdiole, die auch unter dem Begriff "Polyole" zusammengefaßt werden.

Bevorzugte besitzen die gegenüber Isocyanat reaktive Verbindung (b) eine reaktive Gruppe ausgewählt aus der Hydroxylgruppe, der Aminogruppe, der Mercaptogruppe oder der Carbonsäuregruppe. Bevorzugt handelt es sich um die Hydroxylgruppe. Besonders bevorzugt ist die gegenüber Isocyanat reaktive Verbindung (b) ausgewählt aus der Gruppe der Polyesterole, der Polyetherole oder der Polycarbonatdiole, die auch unter dem Begriff "Polyole" zusammengefaßt werden.

In bevorzugten Ausführungsformen werden Kettenverlängerungsmittel (c) eingesetzt, dies sind bevorzugt aliphatische, araliphatische, aromatische und/oder cycloaliphatische Verbindungen mit einem Molekulargewicht von 0,05 x 10³ g/mol bis 0,499 x 10³ g/mol, bevorzugt mit 2 mit Isocyanat reaktiven Verbindungen, die auch als funktionelle Verbindung bezeichnet werden.
Der Kettenverlängerer (c) liegt bevorzugt in einer Menge von 0,1 bis 30 Gew.-Teilen, bevorzugt in einer Menge von 1 bis 20 Gew-%, besonders bevorzugt in einer Menge von 1 bis 8 Gew-% vor, jeweils bezogen auf die gesamte Mischung der Komponenten (a), (b) und (c).

Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.

Als höhermolekulare Polyhydroxylverbindungen mit Molekulargewichten von 500 bis 8000 g/mol eignen sich Polyesterdiole und insbesondere Polyetherdiole. Eingesetzt wird beispielsweise Polybutadiendiol, mit dem auch gute Ergebnisse bei der Herstellung von vernetzbaren TPU erzielt werden. In Betracht kommen daneben auch andere hydroxylgruppenhaltige Polymere mit Ether- oder Estergruppen in der Polymerkette, beispielsweise Polyacetale, wie Polyoxymethylene, und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen sollten zumindest überwiegend linear sein und müssen im Sinne der Isocyanatreaktion im Wesentlichen difunktionell aufgebaut sein. Die genannten Polyhydroxylverbindungen können als Einzelkomponenten oder in Form von Mischungen zur Anwendung kommen.

Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kalium-ethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit Lewis-Säuren, wie Antimonpenta-chlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsaure und/oder Glutarsäure, Alkanolamine, wie z.B. Ethanolamin, N-Alkylalkanolamine, N-Alkyl-dialkanolamine, wie z.B. N-Methyl- und N-Ethyldiethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethylbutandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Insbesondere geeignet sind ferner die hydroxylgruppenhaltigen Polymerisationsprodukte des Tetrahydrofurans.

Die im Wesentlichen linearen Polyetherole besitzen üblicherweise Molekulargewichte von 500 bis 8000 g/mol, vorzugsweise 600 bis 6000 g/mol und insbesondere 800 bis 3500 g/mol, wobei die Polyoxytetramethylenglykole bevorzugt Molekulargewichte von 500 bis 2800 g/mol aufweisen. Sie können sowohl einzeln als auch in Form von Mischungen untereinander zur Anwendung kommen.

Geeignete Polyesterdiole können beispielsweise aus Dicarbonsäuren mit 2 bis 12, vorzugsweise 4 bis 6, Kohlenstoffatomen und Diolen hergestellt werden. Als Dicarbonsäuren kommen beispielsweise in Betracht: aliphatische Dicarbonsäuren, wie Bernsteinsäure, Glutarsäure, Adipinsaure, Korksäure, Azelainsäure und Sebacinsäure, und aromatische Dicarbonsäuren, wie Phthalsäure, Isophthalsäure und Terephthalsäure.

Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für die Diole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die Diole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6; Kondensationsprodukte von α-Hydroxycarbonsäuren, beispielsweise -Hydroxy-capronsäure, und vorzugsweise Polymerisationsprodukte von Lactonen, beispielsweise gegebenenfalls substituiertem α-Caprolacton.

Als Polyesterdiole vorzugsweise verwendet werden Ethandiolpolyadipate, 1,4-Butandiol-polyadipate, Ethandiol-1,4-butandiol-polyadipate, 1,6-Hexandiol-neopentylglykol-polyadipate, 1,6-Hexandiol-1,4-butan-diol-polyadipate und Polycaprolactone.

Die Polyesterdiole besitzen in der Regel Molekulargewichte von 500 bis 6000 g/mol, vorzugsweise von 800 bis 3500 g/mol.

In bevorzugten Ausführungsformen werden mit den Aufbaukomponenten Katalysatoren (d) eingesetzt. Dies sind insbesondere Katalysatoren, die die Reaktion zwischen den NCO-Gruppen der Isocyanate (a) und den Hydroxylgruppen der gegenüber Isocyanaten reaktiven Verbindung (b) und, sofern eingesetzt, dem Kettenverlängerungsmittel (c) beschleunigen. Bevorzugte Katalysatoren sind tertiäre Amine, insbesonder Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan. In einer anderen bevorzugten Ausführungsform sind die Katalysatoren organische Metallverbindungen wie Titansäureester, Eisenverbindungen, bevorzugt Eisen-(III)- acetylacetonat, Zinnverbindungen, bevorzugt solche von Carbonsäuren, besonders bevorzugt Zinndiacetat, Zinndioctoat, Zinndilaurat oder die Zinndialkylsalze, weiter bevorzugt Dibutylzinndiacetat, Dibutylzinndilaurat, oder Wismutsalze von Carbonsäuren mit 6 bis 14 Kohlenstoffatomen, bevorzugt 8 bis 12 Kohlenstoffatomen. Beispiele geeigneter Wismutsalze sind Wismutneodecanoat, Wismutdecanoat, Wismut 2-ethylhexanoate und Wismutoctanoat, wobei Wismutdecanoat bevorzugt verwendet wird.

Der Katalysator (d) wird bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

In einer besonders bevorzugten Ausführung werden zur Herstellung des thermoplastischen Polyurethans 2,2'-, 2,4'- und/oder 4,4'-Diphenylmethandiisocyanat (MDI), vorzugsweise 4,4'-Diphenylmethandiisocyanat (MDI), sowie Polytetrahydrofuran mit einem zahlenmittleren Molekulargewicht von 10³ g/mol und als Kettenverlängerer Butandiol-1,4 eingesetzt und die Reaktion durch Zinndiooktoat katalysiert.

Neben Katalysatoren (d) können den Aufbaukomponenten (a) bis (c) bei der Herstellung auch übliche Hilfsstoffe (e) hinzugefügt werden. Genannt seien beispielsweise oberflächenaktive Substanzen, Füllstoffe, Keimbildungsmittel, Oxidationsstabilisatoren, Gleit- und Entformungshilfen, Farbstoffe und Pigmente, gegebenenfalls Stabilisatoren, bevorzugt gegen Hydrolyse, Licht, Hitze oder Verfärbung, Flammschutzmittel, anorganische und/oder organische Füllstoffe, Verstärkungsmittel und/oder Weichmacher.
Bevorzugte Hilfsstoffe (e) werden näher unter den Komponenten C) bis E) beschrieben.

Als Komponente B) enthalten die erfindungsgemäßen Formmassen 1 bis 50, insbesondere 1 bis 30, vorzugsweise 5 bis 30 und insbesondere 5 bis 25 Gew.-% eines thermoplastischen Polyamides, enthaltend Einheiten, welche sich von 2-Pyrrolidon ableiten.

Gemäß Römpps Online Lexikon (April 2007) sind Synonyme für 2-Pyrrolidon: Pyrrolidin-2-on, 4-Aminobuttersäurelactam, γ-Butyrolactam, 2-Oxopyrrolidon.

Derartige Polyamide B) sind erhältlich durch Polykondensation einer Mischung aus, bezogen auf 100 mol-% B,
B1) 10 bis 50 mol-%, vorzugsweise 20 bis 50 mol-% Itakonsäure, wobei 0 bis 37,5 mol-%, vorzugsweise 0 bis 30 mol% weiterer Dicarbonsäuren (verschieden von Itakonsäure) enthalten sein können,
B2) 10 bis 50 mol-% , vorzugsweise 20 bis 50 mol-% mindestens eines Alkandiamins mit 2 bis 18 C- Atomen oder mindestens eines Diamins mit aromatischem Ring oder deren Mischungen.

Bevorzugte Komponenten B) sind erhältlich durch Polykondensation einer Mischung aus, bezogen auf 100 mol-% B,
B1) 12,5 bis 50 mol-%, vorzugsweise 20 bis 50 und insbesondere 30 bis 40 mol-% Itakonsäure, wobei 0 bis 37,5 mol-% weiterer Dicarbonsäuren (verschieden von Itakonsäure) enthalten sein können,
B2) 12,5 bis 50 mol-%, vorzugsweise 20 bis 50 und insbesondere 30 bis 40 mol-% mindestens eines Diamins mit aromatischem Ring, wobei 0 bis 37,5 Mol.-% weiterer Diamine enthalten sein können.

Die Polykondensation wird wie allgemein üblich durchgeführt durch Mischen der Monomere in meist wässriger, oder überwiegend wässriger Lösung und anschließender Entfernung des Lösungsmittels bei vermindertem Druck und/oder erhöhter Temperatur. Die Temperaturen und Drücke betragen im Allgemeinen von 150 ° C bis 320 ° C vorzugsweise von 180 ° C bis 280 ° C sowie von 0 bis 30 bar. Die Verweilzeiten liegen im allgemeinen von1h bis 30h, bevorzugt von 1h bis 20h.

Es entstehen je nach Monomerenverhältnis Blockstrukturen oder alternierende Strukturen in der Polymerkette, welche an folgenden bevorzugten Beispielen gezeigt werden sollen:

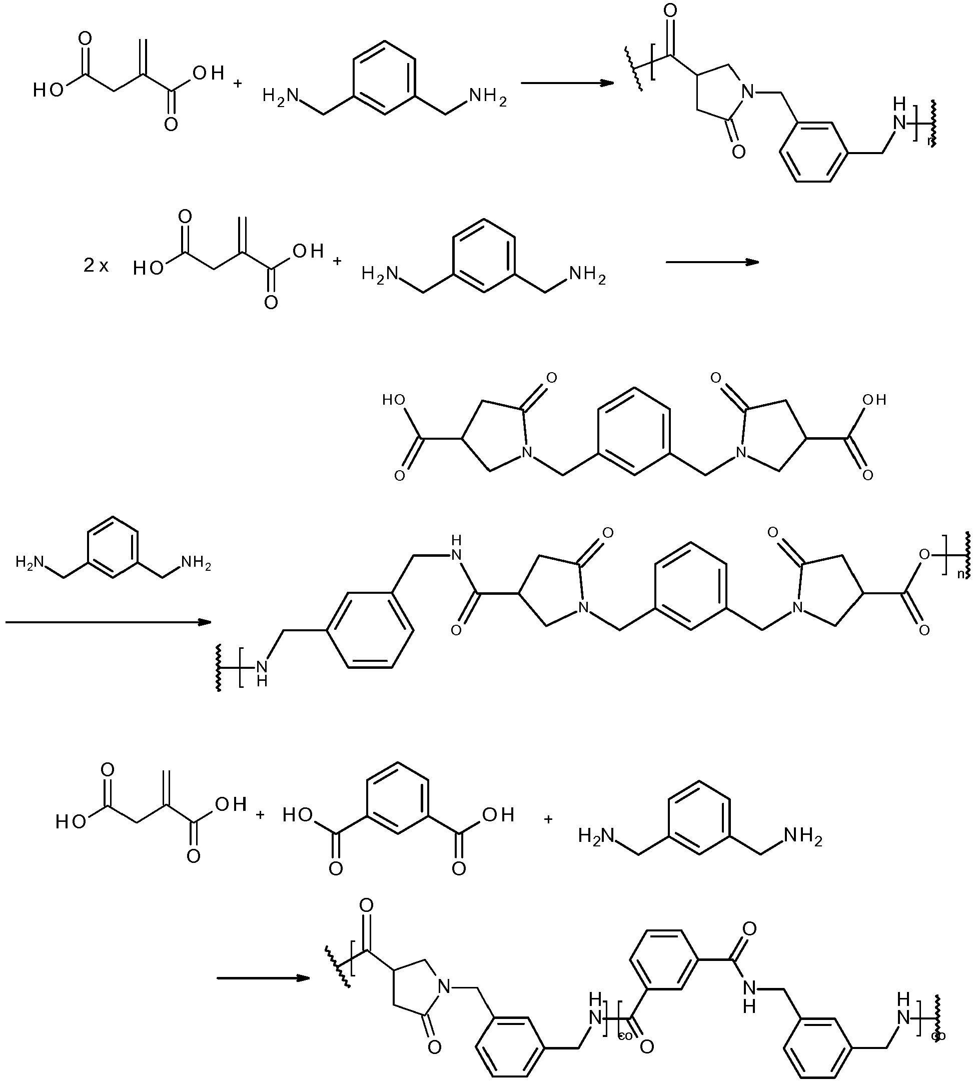

Die letzte Gleichung stellt ein Beispiel für ein bevorzugtes Copolyamid aus Itaconsäure/Terephthalsäure und m-Xylylendiamin dar.

Das Molgewicht der Komponenten B) beträgt im allgemeinen Mn (Zahlenmittel) der Komponente B) gemäß GPC (PMMA Standard und HFIP als Elutionsmittel) von 1000 bis 30000 g/molvorzugsweise von1500 bis 25000 g/mol, das Gewichtsmittel Mw beträgt in der Regel 2000 bis 150 000, vorzugsweise 2500 bis 100 000 g/mol bestimmt mittels GPC wie nachfolgend im Detail beschrieben.

Das Molekulargewicht Mn bzw. Mw der Polyamide wurde wie folgt bestimmt: 15 mg der Polyamide wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyamide wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000 g/mol.

Als aliphatische Dicarbonsäuren B1) und deren Derivate kommen im Allgemeinen solche mit 2 bis 40 Kohlenstoffatomen, vorzugsweise 4 bis 18 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Octadecandisäure,Fumarsäure, 2,2-Dimethylglutarsäure, Suberinsäure, Dimerfettsäure (wie z.B. Empol® 1061 der Fa. BASF), 1,3-Cyclopentandicarbonsäure, 1,4-Cyclohexandicarbonsäure, 1,3-Cyclohexandicarbonsäure, Diglykolsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt werden Bernsteinsäure, Adipinsäure oder Sebacinsäure oder deren jeweilige esterbildende Derivate oder Mischungen davon eingesetzt.
Insbesondere bevorzugt wird Adipinsäure oder deren esterbildende Derivate, wie deren Alkylester oder deren Mischungen eingesetzt. Als aliphatische Dicarbonsäuren werden Sebacinsäure oder Mischungen von Sebacinsäure mit Adipinsäure bevorzugt eingesetzt Als aromatische Dicarbonsäure sind im Allgemeinen solche mit 6 bis 12 Kohlenstoffatomen und vorzugsweise solche mit 8 Kohlenstoffatomen zu nennen. Beispielhaft erwähnt seien Terephthalsäure, Isophthalsäure, Phthalsäure, 2,5-Furandicarbonsäure, 5-Natriumsulfoisophthalsäure, 2,6-Naphthalendicarbonsäure, 1,4-Naphthalendicarbonsäure, 1,8-Naphthalendicarbonsäure, 1,5-Naphthalendicarbonsäure und Anthracendicarbonsäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate B1) können einzeln oder als Gemisch aus zwei oder mehr davon eingesetzt werden. Besonders bevorzugt werden Terephthalsäure oder deren esterbildende Derivate wie Dimethylterephthalat, verwendet.

Es ist auch üblich, sulfonatgruppenhaltige Verbindungen wie ein Alkali- oder Erdalkalimetallsalz einer sulfonatgruppenhaltigen Dicarbonsäure oder deren esterbildende Derivate einzusetzen. Bevorzugt sind Alkalimetallsalze der 5-Sulphoisophthalsäure oder deren Mischungen, besonders bevorzugt das Natriumsalz.

Die Monomeren der Polyamide B) enthalten als Komponente B2) Alkandiamine mit 2 bis 18 C-Atomen oder Diamine mit aromatischen Ring mit 6 bis 30 C-Atomen oder deren Mischungen. Unter Alkandiaminen sollen sowohl lineare als auch verzweigte Alkandiamine mit 2 bis 18 Kohlenstoffatomen verstanden werden.

Verwendet werden können Diamine mit aromatischem Ring mit 6 bis 30 C- Atomen ausgewählt aus der Gruppe m-Xylylendiamin, p-Xylylendiamin, m- oder p- Phenylendiamin, 4,4'Oxydianilin, 4,4'Methylenbisbenzylamin, 1,1'-Biphenyl-4,4'diamin, 2,5-bis(aminomethyl)furan oder deren Mischungen, wobei m-und p-Xylylendiamin bevorzugt sind.

Beispiele geeigneter Alkandiamine sind 1,2-Ethylendiamin, 1,2-Propandiamin, 1,3-Propandiamin, 1,2-Butandiamin,1,3-Butandiamin, 1,4-Butandiamin, 1,5-Pentandiamin, 2-Methyl-1,5-Pentandiamin, 1,6-Hexandiamin, 2,4-Dimethyl-2-ethylhexan-1,3-diamin, 2,2-Dimethyl- 1,3-propandiamin, 2-Ethyl-2-butyl-1,3-propandiamin, 2-Ethyl-2-isobutyl- 1,3-propandiamin, 2,2,4-Trimethyl-1,6-hexandiamin, insbesondere Ethylendiamin, 1,3-Propandiamin, 1,4-Butandiamin und 2,2-Dimethyl- 1,3-propandiamin (Neopentyldiamin); Cyclopentandiamin, 1,4-Cyclohexandiamin, 1,2-Cyclohexandimethanol, 1,3-Cyclohexandimethanol, 1,4-Cyclohexandimethanol, 2,5-bis(aminomethyl)-tetrahydrofuran, 4,4'-Methylenebiscyclohexanamin, 4,4'-Methylenebis-(2-Methyl-cyclohexanamin),oder 2,2,4,4-Tetramethyl-1,3-cyclobutandiamin. Es können auch Mischungen unterschiedlicher Alkandiamine verwendet werden. Bevorzugte Kombinationen - in den vorstehend genannten Mengenverhältnissen- der Monomeren B1) und B2) sind Itakonsäure mit m- oder p- Xylylendiamin oder Mischungen aus m- oder p-Xylylendiamin mit 1,6-Hexandiamin.

Der Gehalt der Komponente C) in den erfindungsgemäßen Formmassen beträgt 0 bis 40, bevorzugt 1 bis 30 und insbesondere 2 bis 25 und insbesondere 2 bis 18 Gew.-%, bezogen auf die Summe der Komponenten A) bis E).

Weitere insbesondere für TPU geeignete Flammschutzmittel wie Metallhydroxide, Phosphatester etc. sind der US 2013/0245169 oder WO 2009/103765 zu entnehmen, weshalb ausdrücklich auf diese Schriften verwiesen wird.

Bevorzugtes halogenfreies Flammschutzmittel C) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure (insbesondere Dioctylphthalat, s. EP 176 836) oder Adipinsäure oder mit polymeren oder oligomeren Verbindungen, z.B. mit Phenolharzen oder Aminoplasten sowie Polyurethanen beschichtet ist (s. EP-A 384 232, DE-A 196 48 503). Derartige sogenannte Phlegmatisierungsmittel sind in der Regel in Mengen von 0,05 bis 5 Gew.-%, bezogen auf 100 Gew.-% B) enthalten.

Außerdem sind Konzentrate von rotem Phosphor, z.B. in einem Polyamid oder Elastomeren E) als Flammschutzmittel geeignet. Insbesondere eignen sich Polyolefinhomo- und -copolymere als Konzentratpolymere. Jedoch sollte der Anteil des Konzentratpolymeren -falls kein Polyamid als Thermoplast eingesetzt wird- nicht mehr als 35 Gew.-% bezogen auf das Gewicht der Komponenten A) bis E) in der erfindungsgemäßen Formmasse betragen.

Bevorzugte Konzentratzusammensetzungen sind
C₁) 30 bis 90 Gew.-%, vorzugsweise von 45 bis 70 Gew.-% eines Polyamids oder Elastomeren E),
C₂) 10 bis 70 Gew.-%, vorzugsweise von 30 bis 55 Gew.-% roter Phosphor.

Das eingesetzte Polyamid für den Batch kann verschieden von B) sein oder bevorzugt gleich B) sein, damit Unverträglichkeiten oder Schmelzpunktdifferenzen keine negative Auswirkung auf die Formmasse aufweisen.
Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Als Komponente C) können die erfindungsgemäßen Formmassen 0 bis 40, vorzugsweise 1 bis 30, vorzugsweise 1 bis 15 und insbesondere 5 bis 10 Gew.-%, bezogen auf A) bis E) eines Phosphinsäuresalzes als halogenfreies Flammschutzmittel enthalten.

Als Komponente C) eignen sich Phosphinsäuresalze der Formel (I) oder/und Diphosphinsäuresalze der Formel (II) oder deren Polymere 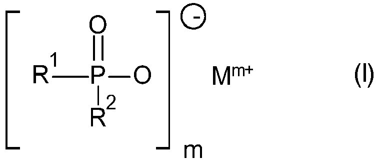 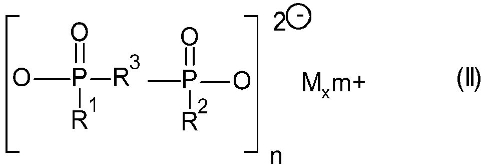 worin
- R¹, R²: gleich oder verschieden sind und Wasserstoff, C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4; n 1 bis 4; x 1 bis 4 bedeuten, vorzugsweise m = 3, x = 3.

Bevorzugt sind R¹, R² der Komponente B gleich oder verschieden und bedeuten Wasserstoff, Methyl, Ethyl, n-Propyl, Iso-Propyl, n-Butyl, tert.-Butyl, n-Pentyl und/oder Phenyl.

Bevorzugt bedeutet R³ der Komponente B Methylen, Ethylen, n-Propylen, Iso-Propylen, n-Butylen, tert.-Butylen, n-Pentylen, n-Octylen oder n-Dodecylen, Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenylbutylen.

Besonders bevorzugt ist R¹, R² Wasserstoff, Methyl, Ethyl und M = Al, wobei Al-hypophosphit besonders bevorzugt ist.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z.B. TiO₂, SnO₂, ZnO, ZnS, SiO₂) gefällt werden. Man erhält somit oberflächenmodifizierte Pigmente, die als lasermarkierbare Flammschutzmittel für thermoplastische Polyester verwendet werden können.

Als Komponente C) können die erfindungsgemäßen Formmassen 0 bis 40, vorzugsweise 1 bis 30, vorzugsweise 1 bis 15 und insbesondere 3 bis 12 Gew.-% eines stickstoffhaltigen Flammschutzmittels, vorzugsweise einer Melaminverbindung enthalten.

Das gemäß der Erfindung (Komponente C) bevorzugt geeignete Melamincyanurat ist ein Reaktionsprodukt aus vorzugsweise äquimolaren Mengen von Melamin (Formel I) und Cyanursäure bzw. Isocyanursäure (Formeln la und Ib)

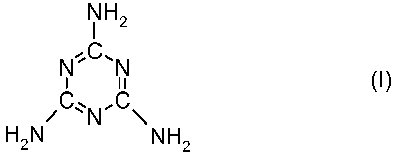

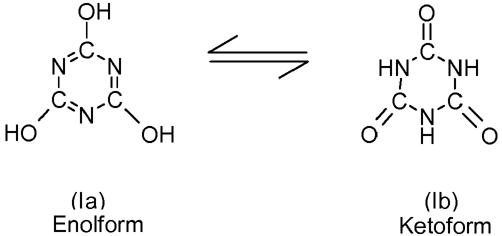

Man erhält es z.B. durch Umsetzung von wässrigen Lösungen der Ausgangsverbindungen bei 90 bis 100° C. Das im Handel erhältliche Produkt ist ein weißes Pulver mit einer mittleren Korngröße d₅₀ von 1,5 - 7 *µ*m und einem d₉₉ Wert kleiner 50*µ*m.

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Bevorzugt sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminphenyltriazin, pro Mol Phosphoratom beträgt. Bevorzugt beträgt der n-Wert solcher Salze im Allgemeinen zwischen 40 und 150 und das Verhältnis einer 1,3,5-Triazinverbindung pro Mol Phosphoratom vorzugsweise zwischen 1,2 und 1,8. Desweiteren wird der pH einer 10 gew.-%igen wässrigen Aufschlämmung von Salzen, hergestellt gemäß
EP-B1095030 im Allgemeinen mehr als 4,5 und vorzugsweise mindestens 5,0, betragen. Der pH-Wert wird üblicherweise bestimmt, indem 25 g des Salzes und 225 g sauberes Wasser von 25° C in einen 300-ml-Becher gegeben werden, die resultierende wäßrige Aufschlammung für 30 Minuten gerührt und dann der pH gemessen wird. Der o.g. n-Wert, der zahlenmittlere Kondensationsgrad, kann mittels 31P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung angibt, die die klare Unterscheidung zwischen Orthophosphaten, Pyrophosphaten und Polyphosphaten ermöglicht. In EP1095030B1 ist außerdem ein Verfahren zur Herstellung des gewünschten Polyphosphatsalzes einer 1,3,5-Triazinverbindung, die einen n-Wert von 20 bis 200 aufweist und deren 1,3,5- Triazingehalt 1,1 bis 2,0 mol einer 1,3,5- Triazinverbindung betragt, beschrieben. Dieses Verfahren umfaßt die Umwandlung einer 1,3,5-Triazinverbindung mit Orthophosphorsaure in ihr Orthophosphatsalz, gefolgt von Dehydratisierung und Warmebehandlung, um das Orthophosphatsalz in ein Polyphosphat der 1,3,5-Triazinverbindung umzuwandeln. Diese Wärmebehandlung wird vorzugsweise bei einer Temperatur von mindestens 300° C, und vorzugsweise bei mindestens 310° C, durchgeführt. Zusätzlich zu Orthophosphaten von 1,3,5-Triazinverbindungen können ebenso andere 1,3,5-Triazinphosphate verwendet werden, einschließlich beispielsweise ein Gemisch aus Orthophosphaten und Pyrophosphaten.

Geeignete Guanidinsalze sind:

| | CAS-Nr. |
|---|---|
| G-carbonat | 593-85-1 |
| G-cyanurat prim. | 70285-19-7 |
| G-phosphat prim. | 5423-22-3 |
| G-phosphatsec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. 200 bis 1000 bevorzugt 600 bis 800, und Tris(hydroxyethyl)isocyanurat (THEIC) der Formel IV 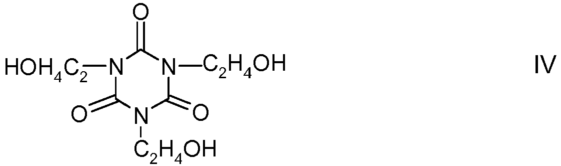 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.
Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90 bis 50 zu 10 bis 50, insbesondere 80 bis 50 zu 50 bis 20 Gew.-%, bezogen auf die Mischung derartiger Komponenten B1).

Weiterhin geeignet sind Benzoguanamin-Verbindungen der Formel V

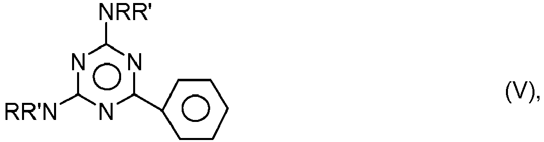

in der R,R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.
Bevorzugt sind ferner Allantoin-Verbindungen der Formel VI 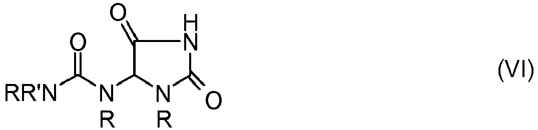 wobei R,R' die in Formel V angegebene Bedeutung haben sowie deren Salze mit Phosphorsäure, Borsäure und/oder Pyrophosphorsäure sowie Glycolurile der Formel VII oder dessen Salze mit den o.g. Säuren 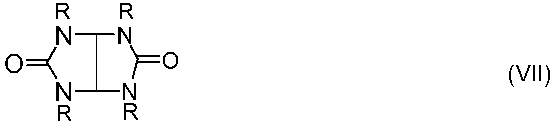 in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

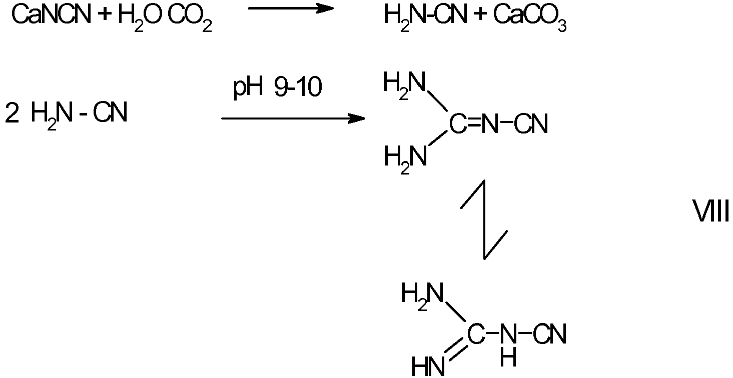

Das im Handel erhältliche Produkt ist ein weißes Pulver mit einem Schmelzpunkt von 209° C bis 211° C.

Ganz besonders bevorzugt wird erfindungsgemäß Melamincyanurat eingesetzt, dessen Teilchengrößenverteilung bevorzugt beträgt:
d₉₈ < 25 µm, bevorzugt < 20 µm
d₅₀ < 4,5 µm, bevorzugt < 3 µm.

Unter einem d₅₀-Wert versteht der Fachmann in der Regel den Teilchengrößenwert, bei welchem 50 % der Teilchen eine kleinere Teilchengröße aufweisen und 50 % eine größere Teilchengröße aufweisen.

Die Teilchengrößenverteilung wird üblicherweise durch Laserbeugung bestimmt (analog ISO 13320).

Als faser- oder teilchenförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quartz, Glimmer, Bariumsulfat und Feldspat genannt, die in Mengen 0 bis 50, bevorzugt von 5 bis 50 Gew.-%, insbesondere 10 bis 40 Gew.-% eingesetzt werden können.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 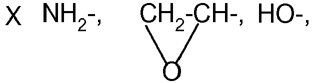
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide, prezipitierter Kalzit, genannt sowie zusätzlich plättchen- oder nadelförmige Nanofüllstoffe bevorzugt in Mengen zwischen 0,1 und 10 %. Bevorzugt werden hierfür Mica, Böhmit, Bentonit, Montmorillonit, Vermicullit, Zinkoxid in Nadelform und Hektorit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente E) können die Formmassen in Mengen von 0 bis 30 bevorzugt 0 bis 20 Gew-% weiterer Zusatzstoffe enthalten. Hierbei kommen in Mengen von 1 bis 10, bevorzugt 0,5 bis 10, insbesondere 1 bis 8 Gew.-% kautschukelastische Polymerisate in Betracht (oft auch als Schlagzähmodifier, Elastomere oder Kautschuke bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall "Toughened Plastics" (Applied Science Publishers, London, 1977) beschrieben.

Im Folgenden werden einige bevorzugte Arten solcher Elastomerer vorgestellt:
Bevorzugte Komponente E) sind Schlagzähmodifier auf Basis von Ethylencopolymeren, welche aufgebaut sind aus:
E₁) 40 bis 98 Gew.-%, bevorzugt 50 bis 94,5 Gew.-% Ethylen
E₂) 2 bis 40 Gew.-%, bevorzugt 5 bis 40 Gew.-% eines (Meth)Acrylates mit 1 bis 18 C-Atomen, oder/und
E₃) 0 bis 20 Gew.-%, bevorzugt 0,05 bis 10 Gew.-% funktioneller Monomerer, ausgewählt aus der Gruppe der ethylenisch ungesättigten Mono- oder Dicarbonsäuren oder der Carbonsäureanhydride oder Epoxidgruppen oder deren Mischungen, wobei die Summe der Gewichtsprozente E₁) bis E₃) 100 % ergibt. oder
ein Ethylen-(Meth)acrylsäure Copolymer, welches bis zu 72 % mit Zink neutralisiert ist.

Besonders bevorzugt sind Ethylencopolymere, aufgebaut aus:
E₁) 50 bis 69,9 Gew.-% Ethylen
E₂) 30 bis 40 Gew.-% eines (Meth)Acrylates mit 1 bis 18 C-Atomen
E₃) 0,1 bis 10 Gew.-% funktioneller Monomerer gemäß Anspruch 1,
wobei die Summe der Gewichtsprozente E₁) bis E₃) 100 % ergibt.

Der Anteil der funktionellen Gruppen E₃) beträgt 0,05 bis 5, vorzugsweise 0,2 bis 4 und insbesondere 0,3 bis 3,5 Gew.-%, bezogen auf 100 Gew.-% E).

Besonders bevorzugte Komponenten E₃) sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure D₂, doch werden Ester mit 1 - 12 C-Atomen, insbesondere mit
2 - 10 C-Atomen bevorzugt.
Beispiele hierfür sind Methyl-, Ethyl-, Propyl-, n-, i-Butyl- und t-Butyl-, 2-Ethylhexyl, Octyl- und Decylacrylate bzw. die entsprechenden Ester der Methacrylsäure. Von diesen werden n-Butylacrylat und 2-Ethylhexylacrylat besonders bevorzugt.

Zusätzlich zu den Estern können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.
Als weitere Beispiele für Monomere E₃) seien Acrylsäure, Methacrylsäure, tertiäre Alkylester dieser Säuren, insbesondere Butylacrylat und Dicarbonsäuren wie Maleinsäure und Fumarsäure oder Anhydride dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im Allgemeinen im Bereich von 1 bis 80 g/10 min (gemessen bei 190° C und 2,16 kg Belastung).

Das Molekulargewicht dieser Ethylen-Copolymeren liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Bevorzugt eingesetzte Handelsprodukte sind Fusabond® A 560, Lucalen® A 2910, Lucalen® A 3110, Nucrel 3990, Nucrel 925, Lotader A x 9800, 3 getabond FS 7 M.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. Blackley in der Monographie "Emulsion Polymerization" beschrieben wird. Die verwendbaren Emulgatoren und Katalysatoren sind an sich bekannt.

Insbesondere bevorzugt sind Copolymerisate, welche keine Einheiten E₂) enthalten, jedoch die Säurekomponente E₃) mit Zn neutralisiert wurde. Hierbei sind Ethylen-(Meth)acrylsäure-Copolymere bevorzugt, welche bis zu 72 % mit Zink neutralisiert wurden (im Handel als Surlyn® 9520 der Firma Dupont erhältlich).

Selbstverständlich können auch Mischungen der vorstehend aufgeführten Kautschuktypen eingesetzt werden.

Weitere Zusatzstoffe E) können in Mengen bis zu 30, bevorzugt bis zu 20 Gew.-% enthalten sein.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.
Die Metallionen sind vorzugsweise Erdalkali und Al, wobei Ca oder Mg besonders bevorzugt sind.
Bevorzugte Metallsalze sind Ca-Stearat und Ca-Montanat sowie Al-Stearat.
Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4, enthalten.

Als Salze des einwertigen Kupfers kommen vorzugsweise Cu-(I)-Komplexe mit PPh₃, Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.
Geeignete Polyamide für das Konzentrat sind Homopolyamide und Copolyamide, insbesondere Polyamid 6 und Polyamid 6.6.
Als sterisch gehinderte Phenole E) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 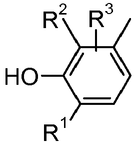 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 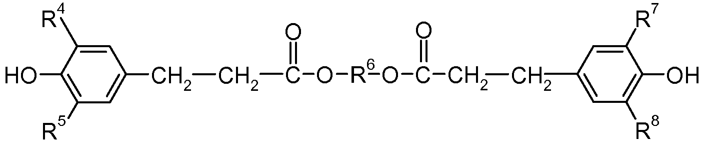 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind 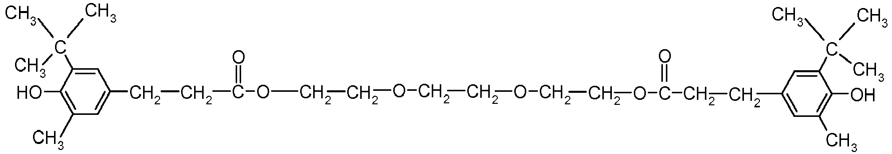 (Irganox® 245 der Firma BASF SE) 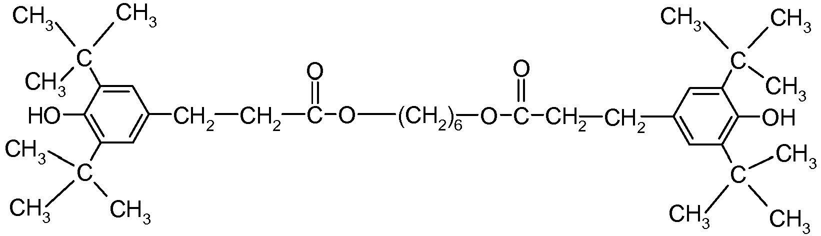 (Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien E), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.
Stabilisatoren im Sinne der vorliegenden Erfindung sind Additive, die einen Kunststoff oder eine Kunststoffmischung gegen schädliche Umwelteinflüsse schützen. Beispiele sind o.g. primäre und sekundäre Antioxidantien, Hindered Amine Light Stabilizer, UV-Absorber, Hydrolyseschutzmittel und Quencher. Beispiele für kommerzielle Stabilisatoren sind gegeben in Plastics Additive Handbook, 5th Edition, H. Zweifel, ed., Hanser Publishers, München, 2001 ([1]), S.98-S.136.

In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber eine Molekulargewicht von nicht größer als 5000 g/mol, besonders bevorzugt von nicht größer als 2000 g/mol aufweisen.

Besonders geeignet als UV-Absorber ist die Gruppe der Benzotriazole. Beispiele für besonders geeignete Benzotriazole sind Tinuvin® 213, Tinuvin® 234, Tinuvin® 571, sowie Tinuvin® 384 und das Eversorb®82. Üblicherweise werden die UV-Absorber in Mengen von 0.01 Gew.-%, bis 5 Gew.-% bezogen auf die Gesamtmasse TPU zudosiert, bevorzugt 0,1 Gew.-%, - 2,0 Gew.-%, insbesondere 0,2 Gew.-%, - 0,5 Gew.-%.

Oft ist eine oben beschriebene UV-Stabilisierung basierend auf einem Antioxidants und einem UV-Absorber noch nicht ausreichend, um eine gute Stabilität des erfindungsgemäßen TPU A) gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10000 g/mol, besonders bevorzugt nicht größer als 5000 g/mol sein.

Besonders bevorzugte Hindered Amine Light Stabilizer sind bis-(1,2,2,6,6-pentamethylpiperidyl) sebacat (Tinuvin® 765, Ciba Spezialitätenchemie AG) und das Kondensationsprodukt aus 1-hydroxyethyl-2,2,6,6-tetramethyl-4-hydroxypiperidine und succinic acid (Tinuvin® 622). Insbesondere bevorzugt ist das Kondensationsprodukt aus 1-hydroxyethyl-2,2,6,6-tetramethyl-4-hydroxypiperidine and succinic acid (Tinuvin® 622), wenn der Titangehalt des fertigen Produktes < 150 ppm, bevorzugt < 50 ppm, insbesondere < 10 ppm bezogen auf die eingesetzten Aufbaukomponenten ist.
HALS Verbindungen werden bevorzugt in einer Konzentration von 0,01 bis 5 Gew.-% eingesetzt, besondere bevorzugt von 0,1 bis 1 Gew.-%, insbesondere von 0,15 bis 0,3 Gew.-% bezogen auf das Gesamtgewicht des thermoplastischen Polyurethanes, bezogen auf die eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Als Komponente E) können die erfindungsgemäßen Formmassen 0,05 bis 5, vorzugsweise 0,1 bis 2 und insbesondere 0,25 bis 1,5 Gew.-% eines Nigrosins enthalten.
Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente E) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als weitere UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die Herstellung der TPU (Komponente A) kann nach den bekannten Verfahren diskontinuierlich oder kontinuierlich, beispielsweise mit Reaktionsextrudern oder dem Bandverfahren nach dem "one-shot-" oder dem Prepolymer-Verfahren, bevorzugt nach dem "one-shot"-Verfahren erfolgen. Bei dem "one-shot-"Verfahren werden die zur Reaktion kommenden Komponenten (a), (b), in bevorzugten Ausführungsformen auch die Komponenten (c), (d) und/oder (e) nacheinander oder gleichzeitig miteinander vermischt, wobei die Polymerisationsreaktion unmittelbar einsetzt. Beim Extruderverfahren werden die Aufbaukomponenten (a), (b) sowie in bevorzugten Ausführungsformen auch (c), (d) und/oder (e) einzeln oder als Gemisch in den Extruder eingeführt und, bevorzugt bei Temperaturen von 100° C bis 280°C, vorzugsweise 140° C bis 250° C, zur Reaktion gebracht. Das erhaltene Polyurethan wird extrudiert, abgekühlt und granuliert.

In einem bevorzugten Verfahren wird in einem ersten Schritt ein thermoplastisches Polyurethan aus den Aufbaukomponenten Isocanat (a), mit Isocyanat reaktive Verbindung (b) Kettenverlänger (c) sowie in bevorzugten Ausführungsformen die weiteren Einsatzstoffe (d) und/oder (e) hergestellt und in einem zweiten Schritt die Komponenten (B bis E) eingearbeitet.
Die oben beschriebene Zubereitung wird bevorzugt für die Herstellung als Spritzguss- Kalendrier- Pulversinter- oder Extrusionsartikel verwendet.

Die erfindungsgemäßen thermoplastischen Formmassen (Komponenten A bis E) können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 180 bis 240°C.

Nach einer weiteren bevorzugten Arbeitsweise können die Komponenten C) bis E) mit einem Präpolymeren Polyamid B) gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente B) bis zur gewünschten Viskosität kondensiert und anschließend mit Komponente A) gemischt.

Die erfindungsgemäßen thermoplastischen Formmassen zeichnen sich durch eine bessere (intrinsische) Flammwidrigkeit (Wärmefreisetzungskapazität), höhere thermische Stabilität, bessere Streckspannung, höheren Rückstand bei der Verbrennung, hohe Transparenz und einen effektiven Flammschutz mit geringerem Gehalt des Flammschutzadditivs in der Formmasse aus.

Ein weiterer Gegenstand der Erfindung ist die Verwendung der Polyamide B) zur Erniedrigung der spezifischen Verbrennungswärme oder der Wärmefreisetzungskapazität oder beider Eigenschaften um mindestens 10 %, vorzugsweise 20 % gegenüber einer Formmasse gemäß Anspruch 1 ohne Komponente B).

Diese eignen sich daher zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informations-technologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen angewandt werden, insbesondere in Anwendungen die einen erhöhten Brandschutz erfordern.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

Weitere Anwendungen sind:
Beschichtung, Dämpfungselement, Faltenbalg, Folie, Faser, Formkörper, Fußboden für Gebäude und Transport, non woven Gewebe, bevorzugt Dichtung, Rolle, Schuhsohle, Schlauch, Kabel, Kabelstecker, Kabelummantelung, Kissen, Laminat, Profil, Riemen, Sattel, Schaum, durch zusätzliches Schäumen der Zubereitung, Steckverbindung, Schleppkabel, Solarmodul, Verkleidung in Automobilen, Wischerblatt, Modifizierer für thermoplastische Materialien, d.h. Substanz die die Eigenschaften eines anderen Materials beeinflusst. Jede dieser Verwendungen für sich genommen ist eine bevorzugte Ausführungsform, die auch als Anwendung bezeichnet wird. Die Anwendungen werden bevorzugt durch Spritzguss, Kalendrieren, Pulversintern, oder Extrusion hergestellt

### Beispiele

Es wurden folgende Komponenten verwendet:
Komponente A1:
   Elastollan ® 1185 ist ein Polyurethan auf gebaut aus Polytetrahydrofuran und Butendiol als Diolkoponenten und MDI als Isocyanatkomponente und weist eine Härte von 85 Shore A auf gemäß DIN 53505.
Komponente B1A
   Die Herstellung erfolgte in Anlehnung an die Verfahrensweise der DE A 4333 238. In einem 1000 ml Rundhalskolben wurden 325g Itakonsäure(IKS), 300g entionisiertes Wasser und 347g m-Xylylendiamin (MXDA) gegeben. Die Reaktionsmischung wurde bei 108° C unter Rückfluss für 60 min gehalten. Die Temperatur wurde innerhalb einer Stunde schrittweise auf 200 ° C erhöht, um Wasser abzudestillieren und anschließend der Druck schrittweise auf 3 mbar erniedrigt, um die Polykondensation unter diesen Bedingungen über insgesamt 75 Minuten durchzuführen.
   Das Polymer (50 mol% IKS, 50 mol% MXDA) wies eine Tg von 145° C auf und eine VZ von 23 ml/g gemessen als 0.5 gew.-%ige Lösung in 96 gew.-%iger Schwefelsäure bei 25° C nach ISO 307 gemäß ISO 307.
Komponente B2A
   In einem1000ml Vierhalskolben wurden 260g Itakonsäure, 73g Adipinsäure (AS), 300g VE-Wasser und 347g m-Xylylendiamin zugegeben. Die Reaktionsmischung wurde unter Rückfluß für 60min bei 108° C gerührt. Dann wurde die Temperatur innerhalb von 60 min auf 200° C erhöht und Wasser abdestilliert. Danach wurde ein Druck von 3mbar bei der gleichen Temperatur für 15 Minuten appliziert.
   Das Polymer (40 mol% IKS, 10 mol% AS, 50 mol% MXDA) hatte eine Tg von 126° C, Mn/Mw 7830/20100 g/mol, VZ 33 ml/g.
Komponente B3A
   In 1000ml Vierhalskolben wurden 195g Itakonsäure, 146g Adipinsäure (AS), 300g VE-Wasser und 347g m-Xylylendiamin zugegeben. Die Reaktionsmischung wurde unter Rückfluß für 60min bei 108° C gerührt. Dann wurde die Temperatur innerhalb von 60 min auf 200° C erhöht und Wasser abdestilliert. Danach wurde einVakuum von 3mbar bei der gleichen Temperatur für 15min appliziert
   Das Polymer (30 mol% IKS, 20 mol% AS, 50 mol% MXDA) hatte eine Tg von 114° C, Mn/Mw 9550/25600 g/mol, VZ 42 ml/g.
Komponente B4A
   In einen1000 ml Vierhalskolben wurden 260g Itakonsäure, 83g Isophthalsäure (IPS), 300g VE-Wasser und 347g m-Xylylendiamin zugegeben. Die Reaktionsmischung wurde unter Rückfluß für 60min bei 108° C gerührt. Dann wurde die Temperatur innerhalb von 60 min auf 200° C erhöht und Wasser abdestilliert. Danach wurde ein Druck von 3mbar bei gleichbleibenderTemperatur für 15 Minuten appliziert
   Das Polymer (40 mol% IKS, 10 mol% IPS, 50 mol% MXDA) hatte eine Tg von 141° C, Mn/Mw 3040/7700 g/mol, VZ 13 ml/g.
Komponente B5A
   In einen1000 ml Vierhalskolben wurden 325g Itakonsäure, 200g VE-Wasser, 174g m-Xylylendiamin und 208g von 70%ige wässrige Lösung von 1,6-Hexandiamin zugegeben. Die Reaktionsmischung wurde unter Rückfluß für 60min bei 108° C gerührt. Dann wurde die Temperatur innerhalb von 60 min auf 200° C erhöht und Wasser abdestilliert. Danach wurde ein Druck von 3mbar bei gleichbleibenderTemperatur für 15 Minuten appliziert
   Das Polymer (50 mol% IKS, 25 mol% MXDA, 25 mol% HMDA) hatte eine Tg von 109° C, Mn/Mw 8950/29900 g/mol, VZ 52 ml/g.
Komponente C1
   Melamincyanurat (Melapur®MC 25 der BASF SE)
Komponente C2
   Resorcinol Bis-(Diphenyl Phosphat), erhätlich unter dem Handelsnamen Reofos® RDP der Chemtura Corporation.
Komponente C3
   Al-diethylphosphinat (Exolit®OP1230 der Clariant GmbH), Partikelgröße (d₉₀) = 80 *µ*m

### Herstellung und Verarbeitung der Formmassen

Der DSM Xplore 15 Mikro-Compounder wurde mit einer Temperatur von 190 ° C betrieben. Die Drehzahl der Doppelschnecken betrug 80 rpm. Die Verweildauer der Polymere nach Beschicken des Extruders betrug ca. 3 min. Der Mikro-Compounder zeigt während der Verarbeitung die Wellenkraft an, welche zum Erreichen der vorgeschrieben Drehzahl aufgebracht werden muss.

Zur Herstellung von Formteilen aus auf dem DSM Xplore 15 Mikro-Compounder hergestellten Massen wurde die Polymerschmelze mittels eines beheizten Schmelzegefäßes in die Spritzgußmaschine Xplore Micro-Injection Molding Machine 10cc übertragen und unmittelbar in die Form gespritzt. Es wurde eine Werkzeugtemperatur von 60° C verwandt. Der Spritzguss erfolgte in drei Stufen zu 15 bar für 4 s, 15 bar für 4 s und 16 bar zu 4 s.
Weitere Formmassen wurden mittels eines Haake PolyLab QC mit Rheomex CTW 100 OS Doppelschnecken-Extruders (Thermo Fisher Scientific Inc.) verarbeitet. Zone 1 und Zone 2 des Extruders wurden bei 210 ° C, Zone 3 und die Düse bei 200 ° C gehalten. Der Extruder wurde mit einer Drehzahl von 100 U/min betrieben, wodurch Durchsätze von 2.5 kg/h erzielt wurden. Das zum Erreichen der Drehzahl erforderliche Drehmoment wurde während des Prozesses aufgezeichnet. Das Extrudat wurde durch ein Wasserbad gezogen und granuliert.

Die Herstellung von Formteilen aus granuliertem Extrudat erfolgte auf der Spritzgussmaschine Arburg Allrounder 470H mit 30mm Schneckendurchmesser (ARBURG GmbH + Co KG), wobei eine Massetemperatur von 200° C, eine Schneckenumfangsgeschwindigkeit von 100 U/min, Fülldrücke von 650 bar bis 700 bar, Nachdruck von 600 bar, ein Staudruck von 50 bar und eine Werkzeugtemperatur von 30 ° C verwendet wurden.

Es wurden folgende Messungen durchgeführt:
Die Wärmefreisetzungskapazität (Heat release capacity), spezifische Verbrennungswärme (specific heat of combustion) und Rückstandsmenge nach Pyrolyse unter Stickstoff wurden mit einem FAA Microcombustion Calorimeter (Hersteller: Fire Testing Technology, UK) an Proben mit einem Gewicht von 2.5 mg bis 3.5 mg bestimmt, wobei eine Heizrate von 1 ° C/s verwendet wurde und der Pyrolyseofen bis 800 ° C geheizt wurde. Der Nachbrenner wurde auf eine Temperatur von 900 ° C eingestellt. Die Messung wurde gemäß der in ASTM D7309-13 Vorgehensweise durchgeführt. Die Rückstandsmenge wurde unmittelbar nach der Entnahme des Tiegels aus dem Gerät mit einer Hochpräzisionswaage bestimmt.

Die Messung der auf die Fläche bezogenen maximalen Wärmefreisetzungsrate (Maximum value of the heat release rate per unit area) und der gesamten auf die Fläche bezogenen Wärmefreisetzung (Total heat released per unit area) erfolgte gemäß ISO 5660-1, mit abweichender Probengeometrie und Probenhalterung. Probenkörpern mit Abmessungen von 60 mm × 60 mm × 3 mm wurden in eine aus Aluminiumfolie geformte Schale gelegt, welche die gleichen lateralen Abmessungen wie der Probenkörper aufwies, aber eine Kantenhöhe von 1 cm aufwies, um ein Übersprudeln der Schale durch flüssiges TPU zu vermeiden. Probenkörper und Aluminiumschale wurden zur Messung auf eine 10cm × 10 cm × 2 cm messende Kalziumsilikatplatte gelegt, welche in den in ISO 5660-1 beschriebenen Probenhalter eingesetzt wurde. Der obere Stahlrahmen des Probenhalters (retainer frame) wurde nicht aufgesetzt. Alle Prüfungen wurden mit einer Strahlungswärmestromdichte von 35 kW/m² an der Oberfläche der Probenkörper durchgeführt.
Niedrigere Werte der Wärmefreisetzungskapazität und der spezifischen Verbrennungswärme entsprechen einer höheren Flammwidrigkeit, wie in den ausführlichen Arbeiten von Lyon et al. gezeigt wird (R. Lyon et al., Journal of Thermal Analysis and Calorimetry, Vol. 89 (2007) 2, 441-448).

### DSC:

Die Glasübergangstemperatur (Tg) des Polymers wurde am Differential Scanning Calorimeter (DSC) Q2000 der Fa. TA Instruments gemessen. Die Abkühl-und Aufheizrate betrug 20 K/min, die Einwaage ca. 8,5 mg, Spülgas war Helium. Die Auswertung der Messkurven (zweite Aufheizkurve) erfolgte in Anlehnung an die ISO-Norm 11357.

### TGA:

Die thermogravimetrische Analyse wurde mit dem Gerät Q5000IR der Firma TA Instruments durchgeführt. Die Probenmasse betrug 2 mg bis 3 mg. Die Einwaage erfolgte in Aluminiumtiegeln und das Material wurde unter Stickstofffluss mit 20 K min⁻¹ von 40 ° C and 600 ° C erhitzt.

### GPC:

Das Molekulargewicht Mn bzw .Mw der Polyamide wurde wie folgt bestimmt:
15 mg der teilaromatischen Polyamide wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyamide wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000 g/mol.

Mechanische Eigenschaften wurden mittels Zugversuchen gemäß ISO 527-2:2012 ermittelt. Für die Bestimmung des E-Moduls wurde eine Geschwindigkeit von 1 mm/min verwendet, für die Bestimmung der übrigen Eigenschaften eine Geschwindigkeit von 50 mm/min. Der Spanndruck betrug 3 bar.
Die Shore-Härteprüfung wurde gemäß DIN 53505 durchgeführt. Die Probendicke betrug in Abweichung zur Norm 4 mm.
Die Transparenz der Materialien wurde visuell an Hand spritzgegossener Platten mit den Abmessungen 60mm × 60 mm × 3 mm, oder alternativ 130 mm × 13 mm × 1.6 mm beurteilt.
Die Mikrostruktur der TPU Mischungen wurde mittels Rasterkraftmikroskopie mit dem Gerät Dimension Icon der Firma Bruker Corporation (USA) bestimmt. Als Betriebsweise wurde das Abtasten (tapping) verwendet und Höhen- sowie Phasenkontrastbilder aufgezeichnet. Es wurde eine Siliziumspitze (TESP der Fa. Bruker Corporation) mit einer Elastizitätskonstante des Ausleger von 42 N/m verwendet. Ebene Schnittflächen wurden mittels des Kryomikrotoms EM UC7 FC7 des Herstellers Leica Microsystems (Wetzlar, Deutschland) bei einer Temperatur von -80 ° C präpariert. Die Rasterkraftaufnahmen wurden bei Raumtemperatur durchgeführt.

Die Zusammensetzungen der Formmassen und die Ergebnisse der Messungen sind den Tabellen zu entnehmen.

Tabelle 1-1 zeigt, dass durch Zumischen des pyrrolidonhaltigen Polyamides B1A zu TPU eine Kombination von erhöhtem Elastizitäts-Modul und stark erhöhte Streckdehnung erreicht werden kann. Auch kann die Härte des Materials erhöht werden. Darüber hinaus zeigen die Messungen, dass die Verbrennungswärme der erfindungsgemäß hergestellten Formmassen deutlich niedriger und die Pyrolyserückstandsmengen deutlich erhöht sind, was eine bessere Flammwidrigkeit belegt.
Die Verarbeitung erfolgte mit dem Haake Rheomex CTW 100 OS Doppelschnecken-Extruder.

**Tabelle 1-1: Zusammensetzungen und Materialeigenschaften**

| | V1-1 | 1-1 |
|---|---|---|
| A1 | 100,0 | 80,0 |
| B1A | 0 | 20,0 |
| Elastizitäts-Modul (MPa) | 23 ± 3 | 45 ± 1 |
| Streckdehnung (%) | 4,7 ± 0,2 | 6,5 ± 0,1 |
| Bruchdehnung (%) | > 500 % | > 500 % |
| Shore Härte A | 89 | 94 |
| Shorte Härte D | 40 | 44 |
| Pyrolyse-Rückstand (%) (TGA, N2, 600 ° C) | 2,3 | 12,2 |
| Wärmefreisetzungskapazität (J g⁻¹ K⁻¹) | 446 | 340 |
| spezifische Verbrennungswärme (kJ g⁻¹) | 28,3 | 23,3 |
| Transparenz | Sehr klar | klar |
| maximale Wärmefreisetzungsrate cone calorimeter (kW m⁻²) | 1756 | 901 |
| gesamte Wärmefreisetzung cone calorimeter (MJ m⁻²) | 84 | 75 |

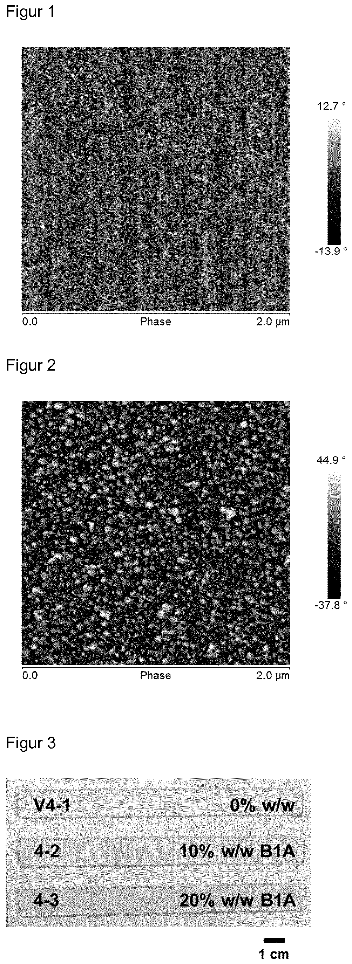

Die Mikrostruktur der Materialien wurde mittels Rasterkraftmikroskopie untersucht, um weiter Belege für die verbleibende Transparenz der Materialien zu erhalten. Wie in Abbildung 1 und Abbildung 2 zu sehen ist, verfügen sowohl das reine TPU, als auch die Mischung in Beispiel 1-1 über morphologische Strukturen, deren Größe unter der Wellenlänge des sichtbaren Lichtes liegt, was zur Transparenz der Materialien führt.

Abbildung 1: Rasterkraftmikroskopische Phasenkonstrastaufnahme von des thermoplastischen Polyurethans V1-1.

Abbildung 2: Rasterkraftmikroskopische Phasenkonstrastaufnahme der erfindungsgemäßen Formmasse 1-1.

Tabelle 2-1 zeigt, dass durch Zumischen der pyrrolidonhaltigen Polyamides B2A und B3A zu TPU eine deutlich geringere Verbrennungswärme und erhöhte Pyrolyserückstandsmengen im Vergleich zu V1-1 erzielt werden, was eine bessere Flammwidrigkeit belegt. Die Verarbeitung erfolgte mit dem Haake Rheomex CTW 100 OS Doppelschnecken-Extruder.

**Tabelle 2-1: Zusammensetzungen und Materialeigenschaften**

| | 2-1 | 2-2 |
|---|---|---|
| A1 | 80,0 | 80,0 |
| B2A | 20,0 | 0 |

| B3A | 0 | 20,0 |
|---|---|---|
| Pyrolyse-Rückstand (%) (TGA, N2, 600 ° C) | 11,8 | 10,5 |
| Wärmefreisetzungskapazität (J g-1 K-1) | 340 | 356 |
| spezifische Verbrennungswärme (kJ g-1) | 24,2 | 24,5 |
| Transparenz | Sehr klar | Sehr klar |

**Tabelle 3-1 zeigt, dass durch Zumischen der pyrrolidonhaltigen Polyamide B4A und B5A zu TPU eine geringere Verbrennungswärme und erhöhte Pyrolyserückstandsmengen erzielt werden, was eine bessere Flammwidrigkeit belegt. Tabelle 3-1: Zusammensetzungen und Materialeigenschaften**

| | 3-1 | 3-2 | 3-3 |
|---|---|---|---|
| A1 | 80,0 | 80,0 | 60,0 |
| B4A | 20,0 | 0 | 0 |
| B5A | 0 | 20,0 | 40,0 |
| Pyrolyse-Rückstand (%) (TGA, N2, 600 ° C) | 12,2 | 6,8 | 11,3 |
| Wärmefreisetzungskapazität (J g⁻¹ K⁻¹) | 314 | 356 | 325 |
| spezifische Verbrennungswärme (kJ g⁻¹) | 23,1 | 25,3 | 23,7 |
| Transparenz | Sehr klar | Sehr klar | Sehr klar |

Zur Verdeutlichung der Transparenz wurde Polymer A1 mit dem pyrrolidonhaltigen Polymer B1A auf dem DSM Xplore 15 Mikro-Compounder verarbeitet und per Spritzgeguß in Formteile von 1.6 mm Dicke verarbeitet. Tabelle 4-1 beschreibt die Formulierungen und Abbildung 1 verdeutlicht, dass die Transparenz des Materialies erhalten bleibt.

**Tabelle 4-1: Zusammensetzungen und Materialeigenschaften**

| | V4-1 | 4-2 | 4-3 |
|---|---|---|---|
| A1 | 100,0 | 90,0 | 80,0 |
| B1A | 0 | 10,0 | 20,0 |
| Transparenz | Sehr klar | klar | klar |

Abbildung 3: Digitales Foto der in Tabelle 4-1 beschriebenen Formmassen.

Wie in Tabelle 5-1 gezeigt, ergeben sich deutliche Verbesserungen in den Brennwerten und in der Rückstandsbildung auch für Kombinationen der pyrrolidonhaltigen Polymere mit verschiedenen Typen von Flammschutzmitteln.

Das Mischen der Formmassen erfolgte mit dem DSM Xplore 15 Mikro-Compounder, wonach per Spritzguß Formteile von 1.6 mm Dicke hergestellt wurden.

**Tabelle 5-1: Zusammensetzungen und Materialeigenschaften**

| | V5-1 | 5-2 | 5-3 | V5-4 | 5-5 | 5-6 | V5-7 | 5-8 | 5-9 |
|---|---|---|---|---|---|---|---|---|---|
| A1 | 80,0 | 60,0 | 60,0 | 80,0 | 60,0 | 60,0 | 80,0 | 60,0 | 60,0 |
| B2A | 0 | 20,0 | 0 | 0 | 20,0 | 0 | 0 | 20,0 | 0 |
| B5A | 0 | 0 | 20,0 | 0 | 0 | 20,0 | 0 | 0 | 20,0 |
| C1 | 20,0 | 20,0 | 20,0 | 0 | 0 | 0 | 0 | 0 | 0 |
| C2 | 0 | 0 | 0 | 20,0 | 20,0 | 20,0 | 0 | 0 | 0 |
| C3 | 0 | 0 | 0 | 0 | 0 | 0 | 20,0 | 20,0 | 20,0 |
| | | | | | | | | | |
| Pyrolyse-Rückstand (%) (TGA, N2, 600 ° C) | 2,2 | 16,9 | 12,8 | 3,4 | 17,4 | 15,5 | 1,1 | 13,1 | 8,7 |
| Wärmefreisetzungskapazität (J g-1 K-1) | 366 | 212 | 262 | 877 | 542 | 421 | 433 | 358 | 350 |
| spezifische Verbrennungswärme (kJ g-1) | 22,5 | 18,35 | 20,0 | 25,8 | 20,9 | 22,0 | 26,0 | 24,5 | 23,5 |
| Transparenz | sehr klar | klar | klar | opak | opak | opak | opak | opak | opak |

## Patentansprüche

1. Thermoplastische Formmassen, enthaltend
A) 10 bis 98 Gew.-% eines thermoplastischen Polyurethans,
B) 1 bis 50 Gew.-% eines thermoplastischen pyrrolidonhaltigen Polyamides, enthaltend Einheiten, welche sich von 2-Pyrrolidon ableiten,
C) 0 bis 40 Gew.-% eines halogenfreien Flammschutzmittels,
D) 0 bis 60 Gew.-% eines faser- oder teilchenförmigen Füllstoffes oder deren Mischungen,
E) 0 bis 30 Gew.-% weiterer Zusatzstoffe,
wobei die Summe der Gewichtsprozente A) bis E) 100 % ergibt.

2. Thermoplastische Formmassen nach Anspruch 1, enthaltend
A) 10 bis 98 Gew.-%
B) 1 bis 30 Gew.-%
C) 1 bis 40 Gew.-%
D) 0 bis 50 Gew.-%
E) 0 bis 30 Gew.-%

3. Thermoplastische Formmassen nach den Ansprüchen 1 oder 2, in denen die Komponente B) erhältlich ist durch Polykondensation einer Mischung aus, bezogen auf 100 mol-% B, B1) 10 bis 50 mol-% Itakonsäure, wobei 0 bis 37,5 mol-% weiterer Dicarbonsäuren (verschieden von Itakonsäure) enthalten sein können, B2) 10 bis 50 mol-% mindestens eines Alkandiamins mit 2 bis 18 C-Atomen oder mindestens eines Diamins mit aromatischem Ring oder deren Mischungen.

4. Thermoplastische Formmassen nach den Ansprüchen 1 oder 2, in denen die Komponente B) erhältlich ist durch Polykondensation einer Mischung aus, bezogen auf 100 mol-% B, B1) 12,5 bis 50 mol-% Itakonsäure, wobei 0 bis 37,5 mol-% weiterer Dicarbonsäuren (verschieden von Itakonsäure) enthalten sein können, B2) 12,5 bis 50 mol-% mindestens eines Diamins mit aromatischem Ring, wobei 0 bis 37,5 Mol.-% weiterer Diamine enthalten sein können.

5. Thermoplastische Formmassen nach den Ansprüchen 1 bis 3, enthaltend als Komponente B2) Diamine mit aromatischem Ring ausgewählt aus der Gruppe m-Xylylendiamin, p-Xylylendiamin, m- oder p- Phenylendiamin, 4,4'Oxydianilin, 4,4'Methylenbisbenzylamin, 1,1-Biphenyl-4,4'diamin, 2,5-bis(aminomethyl)furan oder deren Mischungen.

6. Thermoplastische Formmassen nach den Ansprüchen 1 bis 4, in denen die Komponente C) aus rotem Phosphor, Phosphinsäuresalzen, stickstoffhaltigen Flammschutzmitteln oder deren Mischungen aufgebaut ist.

7. Thermoplastische Formmassen nach den Ansprüchen 1 bis 6, in denen das Molekulargewicht Mn (Zahlenmittel) der Komponente B) gemäß GPC (PMMA Standard und HFIP als Elutionsmittel) von 1000 bis 30000 g/mol beträgt.

8. Thermoplastische Formmassen nach den Ansprüchen 1 bis 6, in denen die Komponente A) eine Härte von 70 bis 90 Shore A gemäß DIN 53505 aufweist.

9. Thermoplastische Formmassen nach den Ansprüchen 1 bis 7, in denen die Komponente A) im Wesentlichen aus Polytetrahydrofuran und Butandiol als Diolkomponenten und MDI als Isocyanatkomponente aufgebaut ist.

10. Verwendung der thermoplastischen Formmassen gemäß den Ansprüchen 1 bis 8 zur Herstellung von Fasern, Folien und Formkörpern.

11. Verwendung der Polyamide B) zur Erniedrigung der spezifischen Verbrennungswärme und/oder der Wärmefreisetzungskapazität um mindestens 10 % gegenüber einer Formmasse gemäß Anspruch 1 ohne Komponente B).

12. Fasern, Folien und Formkörper erhältlich aus den thermoplastischen Formmassen gemäß den Ansprüchen 1 bis 8.

## Claims

1. A thermoplastic molding material comprising
A) 10 to 98 wt% of a thermoplastic polyurethane,
B) 1 to 50 wt% of a thermoplastic pyrrolidone-containing polyamide comprising units derived from 2-pyrrolidone,
C) 0 to 40 wt% of a halogen-free flame retardant,
D) 0 to 60 wt% of a fibrous or particulate filler or mixtures thereof,
E) 0 to 30 wt% of further additives,
wherein the weight percentages A) to E) sum to 100%.

2. The thermoplastic molding material according to claim 1, comprising:
A) 10 to 98 wt%
B) 1 to 30 wt%
C) 1 to 40 wt%
D) 0 to 50 wt%
E) 0 to 30 wt%

3. The thermoplastic molding material according to claims 1 or 2 in which component B) is obtainable by polycondensation of a mixture, based on 100 mol% of B, of
B1) 10 to 50 mol% of itaconic acid, wherein 0 to 37.5 mol% of further dicarboxylic acids (distinct from itaconic acid) may be present,
B2) 10 to 50 mol% of at least one alkanediamine having 2 to 18 carbon atoms or at least one diamine having an aromatic ring or mixtures thereof.

4. The thermoplastic molding material according to claims 1 or 2 in which component B) is obtainable by polycondensation of a mixture, based on 100 mol% of B, of
B1) 12.5 to 50 mol% of itaconic acid, wherein 0 to 37.5 mol% of further dicarboxylic acids (distinct from itaconic acid) may be present,
B2) 12.5 to 50 mol% of at least one diamine comprising an aromatic ring, wherein 0 to 37.5 mol% of further diamines may be present.

5. The thermoplastic molding material according to claims 1 to 3 comprising as component B2) diamines having an aromatic ring selected from the group of m-xylylenediamine, p-xylylenediamine, m- or p-phenylenediamine, 4,4'-oxydianiline, 4,4'-methylenebisbenzylamine, 1,1-biphenyl-4,4'diamine, 2,5-bis(aminomethyl)furan or mixtures thereof.

6. The thermoplastic molding material according to claims 1 to 4 in which component C) is constructed from red phosphorus, phosphinic acid salts, nitrogen-containing flame retardants or mixtures thereof.

7. The thermoplastic molding material according to claims 1 to 6 in which the molecular weight Mn (number-average) of component B) according to GPC (PMMA standard and HFIP eluent) is from 1000 to 30 000 g/mol.

8. The thermoplastic molding material according to claims 1 to 6 in which the component A) has a hardness of 70 to 90 shore A according to DIN 53505.

9. The thermoplastic molding material according to claims 1 to 7 in which the component A) is constructed essentially from polytetrahydrofuran and butanediol as diol components and MDI as the isocyanate component.

10. The use of the thermoplastic molding materials according to claims 1 to 8 for the production of fibers, films and moldings.

11. The use of the polyamides B) for reducing the specific heat of combustion and/or the heat release capacity by at least 10% compared to a molding material according to claim 1 without component B).

12. A fiber, film or molding obtainable from the thermoplastic molding materials according to claims 1 to 8.

## Revendications

1. Matériaux de moulage thermoplastiques, contenant :
A) 10 à 98 % en poids d'un polyuréthane thermoplastique,
B) 1 à 50 % en poids d'un polyamide thermoplastique contenant de la pyrrolidone, contenant des unités qui dérivent de 2-pyrrolidone,
C) 0 à 40 % en poids d'un agent ignifuge sans halogène,
D) 0 à 60 % en poids d'une charge fibreuse ou particulaire ou leurs mélanges,
E) 0 à 30 % en poids d'additifs supplémentaires,
la somme des pourcentages en poids de A) à E) étant de 100 %.

2. Matériaux de moulage thermoplastiques selon la revendication 1, contenant :
A) 10 à 98 % en poids,
B) 1 à 30 % en poids,
C) 1 à 40 % en poids,
D) 0 à 50 % en poids,
E) 0 à 30 % en poids.

3. Matériaux de moulage thermoplastiques selon les revendications 1 ou 2, dans lesquels le composant B) peut être obtenu par polycondensation d'un mélange de, par rapport à 100 % en moles de B,
B1) 10 à 50 % en moles d'acide itaconique, 0 à 37,5 % en moles d'autres acides dicarboxyliques (différents de l'acide itaconique) pouvant être contenus,
B2) 10 à 50 % en moles d'au moins une alcane-diamine contenant 2 à 18 atomes C ou d'au moins une diamine contenant un cycle aromatique ou leurs mélanges.

4. Matériaux de moulage thermoplastiques selon les revendications 1 ou 2, dans lesquels le composant B) peut être obtenu par polycondensation d'un mélange de, par rapport à 100 % en moles de B,
B1) 12,5 à 50 % en moles d'acide itaconique, 0 à 37,5 % en moles d'autres acides dicarboxyliques (différents de l'acide itaconique) pouvant être contenus,
B2) 12,5 à 50 % en moles d'au moins une diamine contenant un cycle aromatique, 0 à 37,5 % en moles d'autres diamines pouvant être contenues.

5. Matériaux de moulage thermoplastiques selon les revendications 1 à 3, contenant en tant que composant B2) des diamines contenant un cycle aromatique choisies dans le groupe constitué par la m-xylylène-diamine, la p-xylylène-diamine, la m- ou p-phénylène-diamine, la 4,4'-oxydianiline, la 4,4'-méthylène-bisbenzylamine, la 1,1-biphényl-4,4'-diamine, le 2,5-bis(aminométhyl)furane ou leurs mélanges.

6. Matériaux de moulage thermoplastiques selon les revendications 1 à 4, dans lesquels le composant C) est formé par du phosphore rouge, des sels de l'acide phosphinique, des agents ignifuges contenant de l'azote ou leurs mélanges.

7. Matériaux de moulage thermoplastiques selon les revendications 1 à 6, dans lesquels le poids moléculaire Mn (moyenne en nombre) du composant B) par CPG (étalon PMMA et HFIP en tant qu'éluant) est de 1 000 à 30 000 g/mol.

8. Matériaux de moulage thermoplastiques selon les revendications 1 à 6, dans lesquels le composant A) présente une dureté de 70 à 90 Shore A selon DIN 53505.

9. Matériaux de moulage thermoplastiques selon les revendications 1 à 7, dans lesquels le composant A) est essentiellement formé par du polytétrahydrofurane et du butanediol en tant que composants diol et du MDI en tant que composant isocyanate.

10. Utilisation des matériaux de moulage thermoplastiques selon les revendications 1 à 8 pour la fabrication de fibres, de films et de corps moulés.

11. Utilisation des polyamides B) pour la réduction de la chaleur de combustion spécifique et/ou de la capacité de libération de chaleur d'au moins 10 % par rapport à un matériau de moulage selon la revendication 1 sans composant B).

12. Fibres, films et corps moulés pouvant être obtenus à partir des matériaux de moulage thermoplastiques selon les revendications 1 à 8.
